(19) Europäisches Patentamt / European Patent Office / Office européen des brevets

(11) **EP 2 572 319 B1**

(12) **FASCICULE DE BREVET EUROPEEN**

(45) Date de publication et mention de la délivrance du brevet:
**20.12.2017 Bulletin 2017/51**

(51) Int Cl.:
*G06T 7/77* *(2017.01)*    *G06K 9/62* *(2006.01)*
*G06K 9/00* *(2006.01)*

(21) Numéro de dépôt: **11715235.5**

(22) Date de dépôt: **19.04.2011**

(86) Numéro de dépôt international:
**PCT/EP2011/056241**

(87) Numéro de publication internationale:
**WO 2011/144408 (24.11.2011 Gazette 2011/47)**

(54) **PROCEDE ET SYSTEME POUR FUSIONNER DES DONNEES ISSUES DE CAPTEURS D'IMAGES ET DE CAPTEURS DE MOUVEMENT OU DE POSITION**

VERFAHREN UND SYSTEM ZUR FUSION VON DATEN AUS BILDSENSOREN UND AUS BEWEGUNGS- ODER POSITIONSSENSOREN

METHOD AND SYSTEM FOR FUSING DATA ARISING FROM IMAGE SENSORS AND FROM MOTION OR POSITION SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2010 FR 1053803**

(43) Date de publication de la demande:
**27.03.2013 Bulletin 2013/13**

(73) Titulaire: **Commissariat à l'Énergie Atomique et aux Énergies Alternatives 75015 Paris (FR)**

(72) Inventeurs:
• **MICHOT, Julien**
**91440 Bures-sur-yvette (FR)**
• **BARTOLI, Adrien**
**F-63000 Clermont-ferrand (FR)**
• **GASPARD, François**
**F-91940 Les Ulis (FR)**

(74) Mandataire: **Dudouit, Isabelle Marks & Clerk France Conseils en Propriété Industrielle Immeuble " Visium " 22, avenue Aristide Briand 94117 Arcueil Cedex (FR)**

(56) Documents cités:

• **EUDES A ET AL: "Error propagations for local bundle adjustment", COMPUTER VISION AND PATTERN RECOGNITION, 2009. CVPR 2009. IEEE CONFERENCE ON, IEEE, PISCATAWAY, NJ, USA, 20 juin 2009 (2009-06-20), pages 2411-2418, XP031607351, ISBN: 978-1-4244-3992-8**
• **MICHELA FARENZENA ET AL: "Efficient Camera Smoothing in Sequential Structure-from-Motion Using Approximate Cross-Validation", 12 octobre 2008 (2008-10-12), COMPUTER VISION Â ECCV 2008; [LECTURE NOTES IN COMPUTER SCIENCE], SPRINGER BERLIN HEIDELBERG, BERLIN, HEIDELBERG, PAGE(S) 196 - 209, XP019109256, ISBN: 978-3-540-88689-1 Section 4, Second Paragraph**
• **MOURAGNON E ET AL: "Generic and real-time structure from motion using local bundle adjustment", IMAGE AND VISION COMPUTING, ELSEVIER, GUILDFORD, GB, vol. 27, no. 8, 2 juillet 2009 (2009-07-02), pages 1178-1193, XP026157408, ISSN: 0262-8856, DOI: DOI:10.1016/J.IMAVIS.2008.11.006 [extrait le 2008-11-28]**
• **Julien Michot ET AL: "Bi-Objective Bundle Adjustment with Application to Multi-Sensor SLAM", 3DPTV, 17 May 2010 (2010-05-17), pages 1-8, XP055274791, Retrieved from the Internet: URL:http://michot.julien.free.fr/drupal/sites/default/files/3DPVT_Michot_etal.pdf [retrieved on 2016-05-24]**

**Description**

L'objet de la présente invention concerne un système et un procédé permettant de fusionner des données issues de capteurs d'images et de capteurs de mouvement ou de position pour une localisation robuste, c'est-à-dire peu sensible aux perturbations extérieures (mouvement brusques, éclairage, etc., et précise d'un système visuel, d'une caméra, etc.

Elle s'applique, par exemple, pour la localisation et la modélisation en 3 dimensions ou 3D d'un environnement. Elle permet aussi le calcul d'une trajectoire en 3D en temps réel, et peut ainsi être utilisée afin de mettre en oeuvre des techniques de « Réalité augmentée ».

L'invention s'applique pour des systèmes comprenant une caméra embarquée ou non (par exemple les caméras HD dans le cinéma) et un capteur de mouvement (inertial) ou tout autre capteur de position (GPS pour Global Position System, odomètres, etc.)

De manière plus générale, elle s'applique pour des techniques de vision par ordinateur, le domaine de la réalité augmentée, la reconstruction 3D et la modélisation, robotique, etc.

**Définitions**

Le mot pose intègre la notion de position et d'orientation d'une caméra ou d'un dispositif composé d'une caméra et d'un module de mesure de mouvement. La notion de fonction de coût dans le domaine de l'ajustement de faisceaux est définie selon l'art antérieur comme étant associée à l'algorithme d'optimisation qui calcule l'erreur de projection (minimisation au sens des moindres carrés de la distance entre les observations 2D (mesures sur les images) et les reprojections théoriques.

L'expression « optimiser les poses » signifie une optimisation de la position et de l'orientation d'une caméra ou d'un dispositif.

Le mot scène désigne un ensemble de primitives caractérisées notamment par leurs positions en 3 dimensions (par exemple, des points 3D, des segments 3D, etc.). Ces éléments ou primitives forment la reconstruction de l'environnement réel, filmé par la ou les caméras. En résumé, le mot "scène" correspond à un environnement reconstruit.

Le terme « dispositif » sera utilisé dans la description pour désigner l'ensemble formé par une caméra intégrant un module de mesure de mouvement ou un capteur d'images et un capteur de mouvement ou de position.

Le mot « système » désigne l'ensemble qui comprend en plus du dispositif prédéfini, des moyens de traitement des informations ou des données, ainsi que des moyens de communication.

Le système calcule la pose du dispositif (qui est en mouvement). On ne calcule pas la pose du système car si l'unité de traitement n'est pas sur un même bâti que le dispositif, alors les poses sont différentes. En fait dans le procédé selon l'invention, on détermine la pose des éléments mobiles du système.

Chaque capteur observe le monde (la scène) et donne une mesure de son propre déplacement (et non celui du dispositif). Donc pour obtenir le mouvement du dispositif, on applique un simple changement de repère, connu de l'Homme du métier, (modélisé aussi dans la fonction Hk définie plus loin dans la description)

Le problème posé dans la présente invention est notamment de répondre au problème de la fusion de données image et inertielle dans le but de déterminer une trajectoire d'un objet ou de reconstruire un environnement en 3D sans a priori sur les incertitudes liées aux différents capteurs, ou encore de manière plus générale de localiser un dispositif.

En effet, il n'est pas toujours possible d'avoir les caractéristiques du bruit (image, inertiel, GPS) venant brouiller les images ou les informations délivrées par les capteurs bruit qui, de plus, peuvent varier dans le temps. La majorité des techniques de localisation qui intègrent des données vision et inertielles sont basées sur une méthode d'optimisation par Filtre de Kalman Etendu, voire par un filtre à particules connus de l'Homme du métier.

Ces méthodes estiment, la pose d'un système à l'aide des algorithmes de vision, et fusionnent ensuite cette mesure "vision" par un filtrage de Kalman étendu. Pour fusionner ces données hétérogènes, il leur est nécessaire d'introduire un terme de covariance du bruit sur les différentes mesures. Ce terme, très important, est souvent difficile à estimer et est généralement fixé a priori. La précision de la localisation dépend fortement de ce paramètre.

Un autre problème de l'optimisation par Kalman est son inefficacité à gérer une importante masse de données de la scène. Ces techniques optimisent deux principaux éléments qui sont l'état du système et la carte de l'environnement (la scène). L'état du système dépend du modèle de mouvement choisi pour modéliser la dynamique du système. On y retrouve généralement la pose du système (le mot pose intégrant la notion de position et d'orientation), exprimé dans un repère global, ainsi qu'éventuellement les vitesses, voire les accélérations. La carte de l'environnement est constituée d'éléments localisés, par exemple, des points de la scène filmée.

Dans les conditions du temps-réel, les méthodes de localisation et modélisation d'environnement en temps réel plus connues sous l'abréviation anglo-saxonne « SLAM » (Simultaneous Localization and Mapping) basées sur Kalman doivent limiter le nombre d'éléments de la carte (quelques dizaines). Cette réduction a pour effet de diminuer fortement la précision de la localisation finale.

De plus, il a été montré dans l'art antérieur que le filtre de Kalman Etendu est une approximation de l'optimisation de Gauss-Newton (première itération).

En conclusion, malgré les avantages offerts par ces méthodes, elles présentent toutefois les inconvénients suivants.

La localisation par vision seule est peu robuste (problème des mouvements rapides, des mouvements critiques comme les rotations pures, des occultations temporaires de la caméra, etc.). De plus, la caméra peut se décalibrer (chocs, changements de température,..).

La localisation par intégration des données inertielles ne permet pas une localisation précise à moyen et long terme: problèmes de dérive, de biais de capteurs, de bruit, etc. Il est donc nécessaire d'utiliser plusieurs capteurs pour localiser de manière précise un système.

Le document de Eudes A et al, intitulé « Error propagations for local bundle adjustment », Computer Vision and Pattern Recognition, 2009.CVPR 2009. IEEE CONFERENCE ON, IEEE, PISCATAWAY, NJ, USA, 20 juin 2009, XP031607351, divulgue une méthode pour optimiser la fiabilité des mesures en mettant en oeuvre des modèles statistiques et des méthodes d'estimation.

Le document de Michela Farenza intitulé « efficient Camera Smoothing in Sequential Structure-from-Motion Using Approximate Cross-Validation », 12 octobre 2008, COMPUTER VISION A ECCV 2008, SPRINGER BERLIN HEIDELBERG, PAGES 196-209, XP 019109256,concerne la reconstruction en trois dimensions. La méthode proposée met en oeuvre uniquement une mesure associée au déplacement de la caméra.

Le document de Mouragnon et al, intitulé « Generic and real-time structure from motion using local bundle adjustment, IMAGE AND COMPUTING, ELSEVIER, GUILDFORD, GB, vol.27, n°8, 2 juillet 2009, pages 1178-1193, XP 026157408, concerne une technique LBA.

Définitions

t = instant donné ou indice temporel,
w: Indice d'un capteur quelconque soit une caméra et donc w=c, soit un capteur de mouvement w=k, k indice phonétique d'une caméra,
c : indice désignant un capteur caméra (ou l'indice du capteur image lorsqu'il y a plusieurs capteurs)
$x_t$ vecteur contenant l'estimation de la scène (ou une partie) et des poses de la caméra (ou une partie) à l'instant t

$z_t^w$ vecteur d'observations lié à une mesure effectuée par le capteur w à l'instant t

s : la scène (l'environnement reconstruit)
**p** : une pose d'une caméra, celle-ci contient la position T et l'orientation R

Le système et le procédé selon l'invention reposent sur une nouvelle approche qui met en oeuvre une pondération automatique entre les données de déplacement et/ou de position avec les données liées aux images par l'intermédiaire d'ajustement de faisceaux.

L'invention concerne un procédé pour localiser un dispositif comprenant une étape de fusion des données issues d'un premier capteur images et d'un module de mesure de mouvement et/ou de position, ledit premier capteur et ledit module de mesure de mouvement et/ou de position étant solidaire et formant un dispositif, caractérisé en ce qu'il comporte au moins les étapes suivantes :

- Une première étape consistant à acquérir plusieurs points sur les images pour définir une pose $p_t^c$ du dispositif caméra image et module de mesure mouvement et/ou position pour un instant donné t

- Une étape de prédiction de la pose $\hat{p}_t^k$ du dispositif caméra et capteur mouvement/position pour un même instant donné t et en utilisant les mesures du module de mesure de mouvement et/ou de position

- Une étape où l'on détermine une contrainte $\varepsilon_k$ associée pour le dispositif caméra et capteur k,

- Une étape où l'on détermine automatiquement un coefficient de pondération $\lambda_t$ de ladite contrainte,

- Une étape d'estimation de la pose courante $p_t$ dudit dispositif,

- Une étape d'optimisation simultanée des poses $p_{t'}$ du dispositif caméra et capteur par la technique d'ajustement des faisceaux en utilisant la fonction de coût suivante :

$$E_{BA}\left(X_t, Z_t\right) = \sum_{t'=t-M}^{t-N} \varepsilon_c^2\left(\left[p_{t'}s\right], z_{t'}^c\right) + \sum_{t'=t-(N-1)}^{t} E_p\left(\left[p_{t'}s\right], Z_t\right)$$

où $(p_{t\text{-M}},\ldots p_{t\text{-N}})$ correspond à des poses fixées et $(p_{t\text{-}(N\text{-}1)}, p_{t\text{-}(N\text{-}2)}, p_t)$ des poses de la caméra à raffiner avec

$$E_p\left(\boldsymbol{x}_t, \boldsymbol{Z}_t\right) = \varepsilon_c^2\left(\boldsymbol{x}_t, z_t^c\right) + \lambda_t^2 \varepsilon_k^2\left(\boldsymbol{x}_t, z_t^k\right)$$

2

- ∘ $\varepsilon_c^2$ : erreurs de reprojection de la scène dans les images
- ∘ $\boldsymbol{x}_t$ := [**ps**] la pose du dispositif et la scène
- ∘ $\boldsymbol{z}_t^c$ : = les observations de la scène détectées dans l'image de la caméra c à l'instant t
- ∘ $Z_t = \left[z_t^c \, z_t^k\right]$ ensemble de toutes les mesures pour tous les capteurs caméra c et des capteurs k ou module de mouvement et/ou de position à un instant t.

Le procédé comporte, par exemple, une étape d'initialisation des bases de données des poses clés et des éléments de scène (3D) en reconstruisant l'environnement du capteur images en utilisant un nombre donné de premières poses et en exécutant une triangulation des primitives 3D à partir des éléments d'intérêts les constituant pour les poses choisies.

Selon un mode de réalisation, l'étape de sélection automatique du coefficient de pondération utilise le résultat d'une étape de raffinement de la pose du dispositif en partant d'une première estimée de pose du dispositif délivrée par le module d'estimation de la pose par vision et en tenant compte des éléments de scène précédemment estimés et en ajoutant au terme de coût, l'erreur de la prédiction (contrainte) délivrée par le module de sélection automatique de la pondération et pondérée par un facteur lambda $\lambda$ ou $\lambda_t$, appris dans le module de sélection automatique de pondération, à la fin de l'étape de raffinement, la pose courante du système est ajoutée à la base de données (historique) des poses.

L'étape de sélection automatique de la pondération comporte, par exemple, une étape de raffinement de la pose du dispositif, dans le module de raffinement, la fonction de coût est uniquement composée des erreurs de reprojections des primitives 3D de la scène sur la caméra dont la pose est actuellement raffinée suivie d'une étape de construction de la contrainte, puis de l'étape de sélection automatique de la pondération, à la fin de l'étape de raffinement, la pose courante du système est ajoutée à la base de données (historique) des poses.

Le procédé peut aussi comporter une étape de sélection d'images clés comprenant les étapes suivantes : sélectionner une première image I1 comme une image clé, puis une seconde image I2 choisie aussi éloignée que possible de I1 dans la vidéo et possédant au moins M points de correspondance d'intérêt avec I1, puis choisir une troisième image I3, la plus éloignée de I2 de façon telle que il y a au moins M points d'intérêts correspondant entre I3 et I2 et au moins M' points d'intérêts correspondant entre I3 et I1, et ainsi de suite pour les images In suivantes, procéder de même en vérifiant que les images In-2, In-1 et In possèdent au moins M points d'intérêts correspondant à la même primitive 3D.

La valeur de la contrainte est, par exemple, choisie parmi la liste des contraintes suivante :

Contrainte de position $\varepsilon_k^t\left(\boldsymbol{x}_t, z_t^k\right) = \dfrac{1}{\sqrt{3}}\left\|\hat{T}_t^k - T_t\right\|$

Contrainte d'orientation : $\varepsilon_k^R\left(\boldsymbol{x}_t, z_t^k\right) = \dfrac{1}{\sqrt{9}}\left\|\hat{R}_t^k R_t^T - I_3\right\|$ avec R la matrice de rotation paramétrisant l'orientation, I la matrice Identité, .....

Contrainte de facteur d'échelle (ou de la norme de la translation)

$$\varepsilon_k^t\left(\boldsymbol{x}_t, z_t^k\right) = \left\|\left\|\hat{T}_t^k - T_{t-1}\right\| - \left\|T_t - T_{t-1}\right\|\right\|$$

Le procédé peut utiliser pour prédire la pose $\hat{\boldsymbol{p}}_t^k$ du dispositif le modèle d'observation inverse $H_t^{-1}$ qui offre une estimation de l'état du dispositif $\boldsymbol{x}_{t'}^k$ à un instant t'≤ t, correspondant à la dernière mesure $z_{t'}^k$ du capteur k:

**4**

$$\hat{p}_t^k = F_t\left(H_{t'}^{-1}\left(z_{t'}^k - n_{t'}^k\right)\right) + w_t$$

ce modèle estime une pose $\hat{p}_t^k$ du dispositif à l'instant t correspondant au temps de l'image $I_t$, à partir de la mesure $z_t^k$ obtenue par le capteur de mouvement/position et de l'état précédent $x_{t-1}$.

L'invention concerne aussi un système pour fusionner des données issues d'un premier capteur images et d'un module de mesure de mouvement et/ou de position, ledit premier capteur et ledit module de mesure de mouvement et/ou de position étant solidaire et formant un dispositif, ledit système comportant : une unité de traitement adaptée à exécuter les étapes du procédé précité.

D'autres caractéristiques et avantages de la présente invention apparaîtront mieux à la lecture de la description qui suit d'un ou plusieurs exemples de réalisation donnés à titre illustratif et nullement limitatif annexés des figures qui représentent:

- La figure 1, un exemple d'architecture système dans laquelle le procédé selon l'invention peut être exécuté,
- La figure 2, une représentation des observations Oi et des reprojections RPi,
- La figure 3, un premier exemple de synoptique du procédé selon l'invention, et
- La figure 4, un deuxième synoptique d'utilisation du procédé selon l'invention.

Afin de mieux faire comprendre le principe et les modules mis en oeuvre dans l'invention, l'exemple qui suit est donné à titre illustratif et nullement limitatif pour un système comprenant une caméra image et un capteur de mouvement et/ou de position en relation avec un dispositif de traitement adapté pour exécuter les étapes des différents modes de réalisation du procédé. Dans certains cas, il sera possible d'utiliser une caméra pourvue d'un module permettant de mesurer son mouvement.

En résumé, le procédé selon l'invention va intégrer des contraintes inter-pose pondérées (c'est-à-dire une contrainte sur la pose mesurée par la vision liée au dispositif de mesure de trajectoire) dans une étape "d'Ajustement de faisceaux", dans une application de localisation (SLAM). Les données inertielles associées à un modèle de mouvement servent à prédire la pose du système à l'instant d'une nouvelle image. Cette prédiction est ensuite utilisée afin de construire une contrainte inter-pose. Une technique issue de la théorie de l'apprentissage sélectionne le coefficient de pondération (ratio des covariances de bruit des signaux) de manière efficace, c'est-à-dire automatique et adaptée au contexte directement dans l'ajustement de faisceaux en temps réel). La contrainte inter-pose ainsi pondérée est ensuite intégrée dans la fonction de coût de l'ajustement de faisceaux. L'ajustement de faisceaux contraint est plus précis que les algorithmes de type Kalman car il effectue notamment plusieurs itérations de Gauss-Newton.

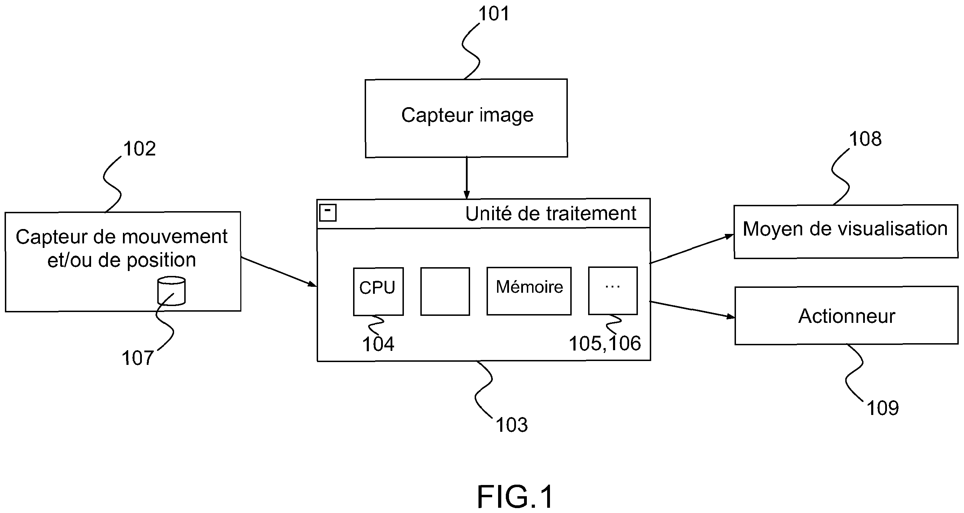

La figure 1 représente un exemple de schéma d'une architecture système dans laquelle le procédé peut être mis en oeuvre.

Le système selon l'invention 100 comporte:

- un capteur d'images 101, tel qu'une caméra sténopé (pinhole), omnidirectionnelle, caméra 3D-TOF, caméra stéréoscopique, Webcam, Infrarouge,
- un capteur de mouvement ou de position 102, tel qu'un GPS, un odomètre, le capteur d'images 101 et le capteur de mouvement peuvent être sur un même bâti, le capteur de mouvement ou de position 102 peut aussi comporter une mémoire tampon 107 mémorisant les données qu'il génère ou qu'il mesure,
- une unité de traitement 103 qui peut être sur le même bâti ou encore délocalisée. Dans le cas où cette unité de traitement est éloignée des capteurs d'images et de position, elle échange les informations ou les données à l'aide de moyens de communication physiques (filaires, Internet) ou encore des moyens radios ou sans fil,
- l'unité de traitement 103 est composée, par exemple d'un processeur 104 adapté à exécuter les étapes du procédé selon l'invention, des moyens de stockage des données, par exemple, une base de données 105 des poses du système, une base de données 106 des primitives 3D de la scène et des relations liant les primitives 3D et leurs observations dans les images. Dans le cas où le capteur de mouvement ne comporte pas de mémoire tampon pour mémoriser les données produites par le capteur de mouvement, cette dernière sera insérée au niveau de l'unité de traitement 103.

Un moyen de visualisation 108 par un opérateur, tel qu'un écran LCD, ou un moniteur de PC, un module 109 commandant un actionneur (moteur, etc.) dans le but de faire par exemple de la navigation autonome d'un robot (on déplace le robot grâce au procédé selon l'invention en commandant les moteurs du robot par exemple.)

Chaque capteur observe le monde (la scène) et donne une mesure de son propre déplacement (et non celui du dispositif). Donc, pour obtenir le mouvement du dispositif, dans le cas d'un dispositif composé d'un capteur caméra et d'un capteur de mouvement, on applique un simple changement de repère, connu de l'Homme du métier (modélisé aussi dans la fonction H décrite ci-après).

Dans le cas d'une caméra comprenant un dispositif de traitement, l'unité de traitement 103 sera intégrée à la caméra.

Avant de décrire les différentes étapes mises en oeuvre par le procédé selon l'invention, quelques rappels utiles pour la compréhension du procédé selon l'invention sont donnés.

### Rappels

Le problème de fusion des capteurs peut être formulé comme un problème inverse, discrétisé dans le domaine temporel. Le processus d'observation est défini pour un capteur w par l'expression du vecteur d'observation suivant :

$$z_t^w = H_t^w(x_t) + n_t^w$$

Où $H_t^w$ est une fonction de projection exécutée par le capteur w à un instant donné t. Elle associe un objet réel ou une information $x_t$ (ici la localisation du système et la scène) à un vecteur d'observation $z_t^w$. La fonction $H_t^w$ inclut le changement de repère qui permet le passage d'observations exprimées dans le repère propre au capteur concerné au repère du système selon l'invention. Ceci peut être estimé par une procédure de calibrage connue de l'Homme du métier. Le vecteur erreur $n_t^w$ est habituellement représenté par un vecteur de fonctions gaussiennes caractérisées par une moyenne nulle (bruit blanc).

Le vecteur erreur $n_t^w$ modélise l'imprécision introduite pendant les phases de mesure.

L'objectif du problème inverse est de récupérer le vecteur réel inconnu $x_t$ à partir d'observations multiples délivrées par les capteurs.

Pour un système dynamique, un modèle de mouvement définissant le comportement du dispositif au cours du temps doit être employé. Le modèle utilisé sera

$$x_t = F_t(x_{t-1}) + w_t$$

vecteur réel inconnu Où $F_t$ définit le nouvel état $w_t$ du dispositif (comprenant notamment la pose) à partir de son état précédant.

Les systèmes statiques, comme par exemple la scène s, sont par définition constants au cours du temps et peuvent donc être exprimés sans l'indice temporel t.

### Estimation Bayesien récursive

Le filtrage statistique consiste à estimer l'état d'un système dynamique qui valide au mieux les mesures incertaines et a priori, sachant que les mesures peuvent être bruitées. On considère dans cette méthode que l'état du système (toutes les mesures des capteurs) est un vecteur de variable aléatoire pour lesquelles on recherche un pdf.

Un Estimateur récursif Bayesien a pour objectif de trouver ce pdf, minimisant la valeur espérée d'une fonction de cout. La fonction de cout la plus connue est la fonction d'erreur quadratique moyenne ou MSE pour laquelle on cherche à minimiser l'erreur quadratique entre un estimateur et ses observations.

Pour un capteur d'indice k, on définit l'erreur quadratique moyenne comme

$$\varepsilon_k^2(x_t, z_t^k) = \frac{1}{n_t^k} \Delta_t^{k\top} (\Sigma_t^k)^{-1} \Delta_t^k$$

où $\Delta_t^k$ est le vecteur de mesure résiduel et $n_t^k$ sa longueur, telle que

$$\Delta_t^k = z_t^k - H_t^k(x_t).$$

Lorsque toutes les mesures sont considérées comme indépendantes les unes des autres avec la covariance

$$; \Sigma_t^k = \sigma_t^k \mathcal{I},$$

avec *I*s la matrice identité On obtient alors

$$\varepsilon_k^2(\mathbf{x}_t, \mathbf{z}_t^k) = \frac{1}{n_t^k} \frac{1}{(\sigma_t^k)^2} \| \mathbf{z}_t^k - H_t^k(\mathbf{x}_t) \|^2.$$

Le problème de la fusion de capteur consiste à minimiser toutes les erreurs quadratiques moyennes des capteurs. Un exemple d'estimateur Bayesien est l'ajustement de faisceaux.

## Technique de l'ajustement de faisceaux

La technique d'ajustement de faisceaux ou BA pour Bundle Adjustment est une technique d'optimisation basée sur une méthode de résolution des moindres carrés non-linéaires (par exemple Gauss-Newton, Levenberg-Marquardt,...). La fonction objective E à minimiser est généralement un terme de coût basé sur l'image (l'unité étant le pixel) et l'on utilise par exemple l'Erreur Quadratique Moyenne MSE: l'erreur de reprojection $E\left(\mathbf{x}_t, \mathbf{z}_t^c\right) = \varepsilon_c^2\left(\mathbf{x}_t, \mathbf{z}_t^c\right)$ qui est la somme des distances élevées au carré entre les observations 2D, $z_t^c$ de la caméra c à l'image t et les reprojections de la scène dans l'image.

$\varepsilon_c^2$ : erreur définie précédemment

**x$_t$ : = [ps]** la pose du dispositif et la scène

$z_t^c$ : = les observations de la scène détectées dans l'image à l'instant t par la caméra c.

La technique d'ajustement de faisceaux est utilisée pour différentes applications, en fonction des variables d'entrée à optimiser. Habituellement, les variables peuvent être la dernière pose **p**$_t$ seulement et l'on parle de "raffinement de pose", de la scène seule **s** ou d'un certain nombre de poses et de la scène et l'on parlera alors d'ajustement de faisceaux local ou global (si on raffinement toutes les poses) [**p**$_t$ **s**].
Par exemple, afin de raffiner la scène et la pose du dispositif on résout l'équation :

$$x_t^* = \arg\min_{x_t} E\left(x_t, z_t^c\right),$$ l'exposant c signifie que ce sont des observations effectuées par la caméra. L'exposant * indique une optimisation.

Cette équation peut être résolue par une technique de l'art antérieur telle que Gauss-Newton ou Levenberg-Marquardt.

## Erreur de reprojection

On définit ici l'erreur de reprojection pour des observations effectuées par une caméra k :

$$\varepsilon_c^2\left(x_t, z_t^c\right) = \frac{1}{n_t^c} \frac{1}{(\sigma_t^c)^2} \left\| z_t^c - \Psi(x_t, s') \right\|$$ Avec $\Psi(x_t, s')$ la fonction de projection d'un ensemble de primitives 3D **s'** de la scène dans l'image opérée par la caméra c dont la pose **p**$_t$ est contenue dans **x**$_t$. Cette fonction est propre au type de caméra et au type de primitives 3D utilisées dans le système.

On peut, par exemple, prendre une caméra de type sténopé et des primitives formées de points 3D.

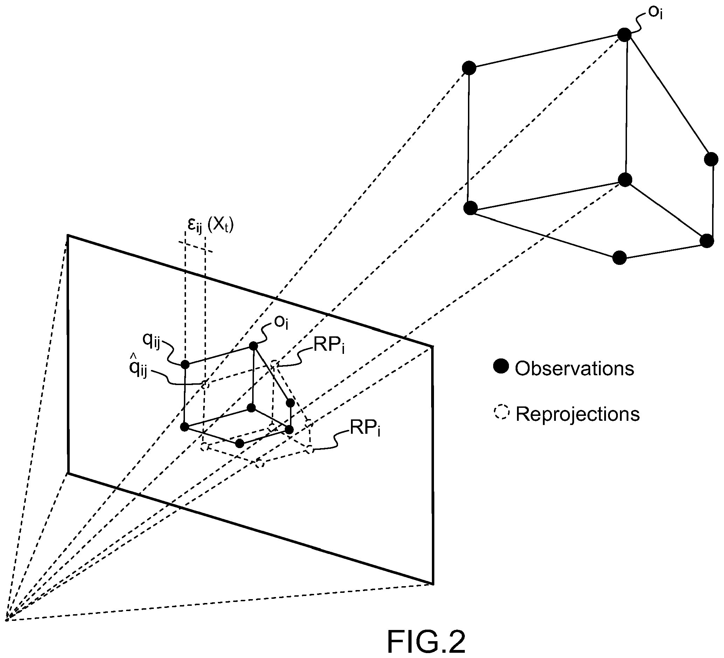

La figure 2 représente une projection d'un point 3D

$$\varepsilon_c^2\left(x_t, z_t^c\right) = \frac{1}{n_{ij}^c} \frac{1}{(\sigma_{ij}^c)^2} \sum \varepsilon_{ij}(x_t)$$

$\sigma_{ij}^c$ l'écart type de l'observation $z_{ij}$ si celui-ci est connu (sinon $\sigma_{ij}^c = 1$ ). et $\left\{z_t^c = \hat{q}_{ij}\right\}$ les observations de la camera c à l'instant t.

D'autres types existent dans le domaine et sont connus de l'Homme du métier.

## Modules pour l'architecture système

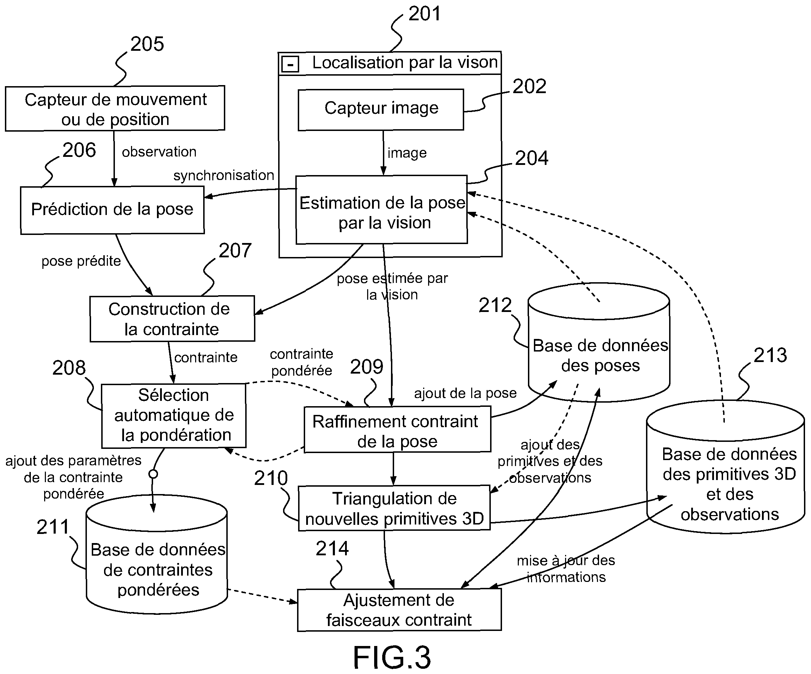

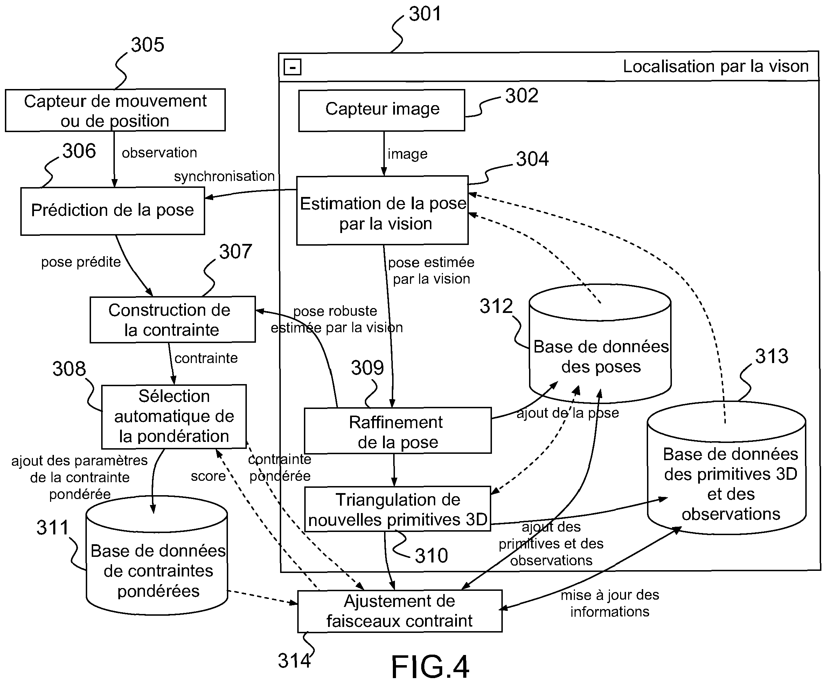

Les figures 3 et 4 décrivent deux exemples de variante de mise en oeuvre pour le procédé selon l'invention. Les modules et leurs fonctionnalités mis en oeuvre dans ces deux variantes vont être décrits.

### *Partie localisation par vision*

### [201,301] Module de localisation par vision situé au niveau du dispositif du traitement des données

Dans ce module les techniques de l'état de l'art sont utilisées pour estimer la pose du système à partir des images de la caméra. Ce module peut contenir divers algorithmes de l'état de l'art et peut donc varier suivant les implémentations.

L'important pour le procédé selon l'invention est de disposer en sortie de la partie vision :

- d'une estimée de la pose du système
- d'un historique des dernières poses du système (ou une partie)
- d'un historique des primitives 3D de la scène et leurs observations dans les images (ou une partie).

### [202,302] Acquisition des images

On considère un module d'acquisition des images provenant d'une caméra de manière synchrone ou asynchrone.

### [204,304] Estimation de la pose par la vision

On estime la pose (position et orientation) du dispositif dans le cas où les capteurs ne sont pas sur le même bâti que l'unité de traitement à l'aide des images définies précédemment.
L'estimation de la pose s'opère au travers des méthodes suivantes

### Détection des éléments d'intérêt 2D

Lorsqu'une image arrive au module [204,304], le procédé exécute une détection des éléments d'intérêt. Un élément d'intérêt est une observation d'une primitive 3D qui a une position bien définie dans une image et qui correspond à un point de l'espace détectable de manière robuste au changement de point de vue ou d'éclairage. Il existe de nombreux détecteurs connus de l'Homme du métier.

### Description des éléments d'intérêt

Les éléments d'intérêts sont ensuite caractérisés par des descripteurs permettant de les différencier les uns des autres et de pouvoir les retrouver dans les images suivantes. Un descripteur permet de reconnaître le point grâce à son environnement proche.
Il existe de nombreux descripteurs (ZNCC, abréviation anglo-saxonne de Zero Mean Normalized Cross Correlation, etc.) connus de l'Homme du métier.

### Mise en correspondance des éléments d'intérêt

Considérons maintenant que l'on dispose de deux images de la même scène prises selon des points de vue différents. Pour chacune d'elles, on suppose que l'on a détecté des éléments d'intérêt et calculé les descripteurs correspondants.

La phase d'appariement proprement dite consiste à établir une correspondance entre les éléments d'intérêt ayant des caractérisations similaires entre les deux images.

Il existe plusieurs méthodes d'appariement connues de l'Homme du métier.

### Calcul de la pose à partir des correspondances

Une pose du dispositif est définie par la position $\mathbf{T}_t$ en 3 dimensions (x, y, z) dans un repère global ainsi que l'orientation du dispositif, stockée par exemple sous la forme d'une matrice de rotation $R_t$. La méthode peut varier, par exemple on peut prendre l'algorithme des 5 points ou des 8 points (méthodes classiques en vision par ordinateur) et calculer la pose du dispositif à partir de N images. On peut aussi calculer la pose du dispositif en utilisant la scène déjà reconstruite (algorithme de resection connu de l'Homme du métier). Les paramètres décrivant la pose peuvent aussi varier (un quaternion au lieu d'une matrice de rotation, etc).

### Estimation robuste de la pose

La première estimée de la pose peut être perturbée par des erreurs dues aux méthodes précédentes et l'on propose ici d'estimer de manière plus précise et robuste la pose du dispositif. Pour cela l'Homme du métier utilise des méthodes connues : RANSAC, M-Estimateur, etc...

### Sélection des poses clés

Le mouvement entre deux images consécutives doit être suffisamment important pour calculer de manière précise la géométrie épipolaire, et ainsi estimer la pose des deux images. Ainsi, le procédé sélectionne des images relativement éloignées les unes des autres mais qui ont suffisamment de points en commun. Pour cela, la première image I1 est toujours sélectionnée comme une image clé. La seconde image 12 sélectionnée est choisie aussi éloignée que possible de I1 dans la vidéo mais c'est une image qui doit posséder au moins M points de correspondance d'intérêt avec I1. Ensuite, pour 13, on choisit l'image la plus éloignée de 12 de façon telle qu'il y a au moins M points d'intérêts correspondant entre 13 et 12 et au moins M' points d'intérêts correspondant entre 13 et I1. Ainsi, il y a suffisamment de points d'intérêts communs entre les images pour déterminer le mouvement de la caméra. Pour les images In suivantes, on procède de même en vérifiant que les images In-2, In-1 et In possèdent au moins M points d'intérêts correspondant à la même primitive 3D. Une image I ne devient une image clé In que si elle respecte ces règles. Cette méthode de détection des images clé peut varier et non proposons ici un exemple.

### Initialisation de la scène

L'initialisation de la scène n'est opérée qu'une seule fois en début de séquence. Il s'agit ici de reconstruire une première fois l'environnement. Pour cela, on peut par exemple utiliser les 3 premières poses clés et trianguler les primitives 3D à partir de leurs observations (éléments d'intérêt) dans les 3 images (méthode de triangulation 3D). Elle permet notamment de constituer les bases de données des poses clés et des éléments de scène (3D).

### [212,312] Base de données des poses clés

On considère que l'on possède une base de données qui contient les N (de 2 à toutes) dernières poses du système (avec les paramètres de calibrage courants de la caméra).

### [213,313] Base de données des éléments de scène

On considère que l'on possède une base de données des primitives 3D de la scène reconstruite, ainsi que leurs correspondances (associations observations 2D (x,y) - primitive 3D) dans chaque image clé dans lesquelles l'élément aura été détecté (dont on connait la pose (position et orientation) grâce à la base de données [212]). Les primitives 3D sont par exemple des points 3D (x,y,z) mais peuvent être d'autres éléments (patch, segment, etc...).

### [209,309] Raffinement contraint de la pose (Extended Pose refinement)

Les modules raffinement de la pose « pose refinement » et raffinement contraint de la pose « extended pose refinement » sont basés sur un algorithme très connu dans le domaine de la vision par ordinateur : l'ajustement de faisceaux. Plus précisément, dans cette partie, le procédé raffine juste la pose courante du dispositif en partant d'une première estimée de pose délivrée par le module [204,304] et en tenant compte des éléments de scène précédemment estimés.

Dans le module [309], la fonction de coût est uniquement composée des erreurs de reprojections des primitives 3D de la scène sur la caméra dont la pose est actuellement raffinée. Dans le module [209], on ajoute au terme de coût, l'erreur de la prédiction (contrainte) délivrée par le module [208] et pondérée par un facteur lambda $\lambda$ ou $\lambda_t$, appris dans le module de sélection automatique de pondération [208,308].

A la fin du raffinement, la pose courante du système est ajoutée à la base de données (historique) des poses [212,312].

Le raffinement de la pose peut être exécuté de la manière détaillée décrite ci-après.

Dans un procédé de suivi incrémental SfM, lorsqu'une nouvelle image ou une image clé est détectée un raffinement est exécuté sur la localisation de la caméra.

Ainsi, il est possible de récupérer la pose courante $\mathbf{p}_t$ du dispositif qui explique les mesures de capteurs

$$\mathbf{Z}_t = \left[ \mathbf{z}_t^c \mathbf{z}_t^k \right]$$ (ensemble de toutes les mesures pour tous les capteurs caméra c et des capteurs de mouvement k à un instant t). La fonction d'agrégation des coûts est ensuite construite avec le terme d'erreur standard visuel $\varepsilon_c^2$, ainsi que la contrainte sélectionnée $\varepsilon_k^2$ basée sur la prédiction de pose donnée par le capteur k ou de la caméra lorsque cette dernière comporte un module intégré de mesure de mouvement. Le second terme est pondéré avec un facteur de pondération sélectionné préalablement $\lambda_t$ comme il sera détaillé plus loin dans la description.

Le terme MSE (erreur quadratique moyenne) global est alors donné par la formule $E_p(x_t, Z_t) = \varepsilon_c^2(x_t, z_t^c) + \lambda_t^2 \varepsilon_k^2(x_t, z_t^k)$ pour un capteur de mouvement ou de position k, une camera c, un instant t.

La pose courante $\mathbf{p}_t$ est ensuite optimisée en utilisant l'algorithme de Levenberg-Marquardt avec la fonction de coût $\boldsymbol{E}_p(\boldsymbol{x}_t, \boldsymbol{Z}_t)$ pour résoudre

$$p_t^* = \arg\min_{p_t} E_p(x_t, Z_t)$$

Le « * » signifie que l'on obtient la meilleure valeur de $\mathbf{p}_t$

**[210,310] Reconstruction de primitives 3D**

Ce module de reconstruction de primitives 3D est activé après le raffinement de la pose ([209,309]), soit juste après, soit quelques temps après. Il consiste en la triangulation des primitives 3D de la scène (point 3D par exemple) à partir de leurs observations 2D effectuées dans les N dernières images (par ex N=3). Pour cela, on utilise les algorithmes de l'état de l'art de la vision par ordinateur.

A la fin des calculs, les primitives 3D et leurs correspondances (associations observations 2D - primitive 3D) sont ajoutées dans la base de données 2D/3D.

***Partie estimation de la pose par l'intégration des données d'un capteur de position/déplacement***

**[205,305] Acquisition des données du capteur de position/déplacement**

On considère un système (liaison capteur-module de traitement/ driver) permettant de récupérer de manière asynchrone les données du capteur de mouvement et/ou de position. Lorsqu'une donnée est produite par le capteur de mouvement, celle-ci est récupérée par un programme pour être stockée dans une mémoire tampon, soit située au niveau du capteur de mouvement et/ou de position, soit au niveau du module de traitement.

**[206,306] Prédiction de la pose à partir du capteur inertiel**

Lorsqu'une demande est faite au module de prédiction (206, 306) (par le module estimation de la pose par vision [204,304]), celui-ci récupère les observations du capteur antérieures à l'instant demandé par la synchronisation, les enlève de la pile ou mémoire tampon, et calcule ensuite la pose (ou une partie de celle-ci) du dispositif ou du système, à partir de ces mesures et d'un modèle de mouvement (optionnel mais la méthode est plus précise avec). Si l'on considère que le dispositif (composé de la caméra et du capteur de mouvement) est séparé du moyen de traitement, par exemple, un PC, alors le procédé calcule la pose du dispositif et non du système comprenant le PC.

Hypothèse modèle prédiction

La technique d'ajustement de faisceaux ne fournissant pas de vitesses optimisées, ces quantités doivent être estimées en amont, ou être fournies directement par le second capteur de mouvement et/ou de position. Il est aussi supposé, la présence du modèle d'observation inverse $H_{t'}^{-1}$ qui offre une estimation de l'état du dispositif $x_{t'}^k$ à un instant $t' \leq t$, correspondant à la dernière mesure $z_{t'}^k$ du capteur k. Ainsi, avec le modèle de prédiction du mouvement du dispositif, au temps ou instant t la pose prédite est la suivante:

$$\hat{p}_t^k = F_t\left(H_{t'}^{-1}\left(z_{t'}^k - n_{t'}^k\right)\right) + w_t$$

Ce modèle estime une pose $\hat{p}_t^k$ du dispositif (caméra et capteur de mouvement et/ou de position, par exemple) à l'instant t correspondant au temps de l'image $I_t$, à partir de la mesure $z_t^k$ obtenue par le capteur de mouvement/position et de l'état précédent $x_{t-1}$. Ainsi, les vecteurs d'erreur $n_{t'}^k$ et $w_t$ sont supposés être nuls.

**[207,307] module de définition des contraintes**

Ce module définit le type de contrainte (ou type d'erreurs) que l'on va ajouter à la fonction de coût des raffinements.
Dans la première version du système (figure 3), le procédé modifie les fonctions de coût des modules [209] et [214], alors que dans la deuxième version de mise en oeuvre du procédé représentée à la figure 4, ce terme est ajouté seulement dans la fonction de cout de l'ajustement de la pose [314].
Ce terme (fonction de cout) est généralement une distance entre la pose (ou une partie) courante du système ou du dispositif (et que l'on optimise) et la pose prédite par le module [206,306]. Le choix de l'erreur est à spécifier par le concepteur et dépend du type d'observations que le capteur de mouvement ou de position délivre. Par exemple, si l'on utilise un gyroscope 3D, celui-ci délivre une information de vitesse angulaire $\Omega$. Cette information, alliée à un modèle de mouvement (vitesse angulaire constante par exemple), permet de construire une prédiction de l'orientation $q^k$ au même instant que l'image clé (dont l'orientation courante est $q^c$). L'erreur peut par exemple être la distance entre les deux quaternions $\|q^k - q^c\|$.
Le type de contrainte dépend de la nature des mesures effectuées par les capteurs. Par exemple, plusieurs contraintes pour des capteurs peuvent être proposées

Contrainte de position $\varepsilon_k^t\left(\mathbf{x}_t, z_t^k\right) = \dfrac{1}{\sqrt{3}}\left\|\hat{T}_t^k - T_t\right\|$

Contrainte d'orientation : $\varepsilon_k^R\left(x_t, z_t^k\right) = \dfrac{1}{\sqrt{9}}\left\|\hat{R}_t^k R_t^T - I_3\right\|$ avec R la matrice de rotation paramétrisant l'orientation, $I$ la matrice Identité, .....
Contrainte de facteur d'échelle (ou de la norme de la translation)

$$\varepsilon_k^t\left(x_t, z_t^k\right) = \left|\left\|\hat{T}_t^k - T_{t-1}\right\| - \left\|T_t - T_{t-1}\right\|\right|$$

Chaque contrainte aura un impact différent sur le système de localisation et tendra à corriger la dérive correspondante. Le procédé selon l'invention est générique, ainsi la contrainte de l'utilisateur définie pourra être tout terme de distance (en moindres carrés) qui contraint les variables optimisées dans la technique d'ajustement de faisceaux.

**sélection automatique des pondérations: Estimation du ratio des covariances**

**Module de sélection de nouvelles primitives 3D**

L'erreur ou contrainte définie par le module de construction de contrainte doit être pondérée par un coefficient que l'on appellera lambda $\lambda$, choisi par une technique spécifique dont certains exemples sont donnés ci-après.

Dans l'exemple donné, plusieurs méthodes sont proposées pour calculer ce facteur de pondération. Ces méthodes peuvent être utilisées indépendamment les unes des autres pour résoudre ce problème.

Pour cela, une fonction de coût globale est construite avec le terme d'erreur basé vision et avec le terme de fusion (la contrainte précédente) pondéré par le lambda. Plusieurs optimisations sont ensuite exécutées, soit appelant plusieurs fois le module [209] de la figure 3, soit appelant plusieurs fois le module [314] de la figure 4, pour un jeu de lambda différent (par exemple avec un jeu statique de 100 lambdas allant de 0.1 à 100).

Comme détaillé ci-après, les critères de sélection du paramètre de pondération lambda varient. Soit on utilise la méthode de L-Curve et il s'agit de déterminer le maximum de courbure d'une certaine courbe, soit on utilise la méthode dite de la validation croisée et on cherche la meilleure valeur de lambda pour laquelle la prédiction d'une reprojection est la plus efficace.

On peut aussi utiliser d'autres méthodes par critères (L-tangent Norm, Reginska, etc..) ou par apprentissage (comme la validation croisée, etc).

Une fois que le meilleur lambda a été choisi, on procède à l'optimisation finale (soit [209], soit [314]) avec cette pondération et nous stockons de plus cette valeur ainsi que les paramètres de la contrainte dans la base de données prévue à cet effet [211,311].

Deux méthodes pour déterminer le paramètre de pondération vont être données à titre illustratif, sachant qu'il y en a d'autres connues de l'Homme du métier qui pourraient être mises en oeuvre.

**Méthode de sélection par critère Lcurve**

Le critère L-Curve à été à l'origine employée dans les problèmes de régularisation dans lesquels on cherche à estimer un paramètre de régularisation efficace permettant de minimiser aussi bien un premier terme de coût que le nombre de paramètres d'un modèle.

La méthode à été de plus utilisée dans des problèmes d'optimisation moindres carrés non-linéaires à plusieurs objectifs, où il s'agissait de trouver un compromis entres les différents objectifs en estimant le facteur de pondération lambda de chaque terme de coût, et ainsi tenter de minimiser au mieux l'ensemble des objectifs.

Le critère L-Curve représente donc le compromis entre les deux termes de coût, en échelle log-log.

Ce critère possède généralement une forme de L, dans laquelle un 'coin' sépare la partie horizontale de la partie verticale, correspondant à la prépondérance d'un des deux termes de coût à minimiser (objectifs). La courbure k(l) du critère L-Curve permet de trouver le coin recherché:

$$\kappa(\lambda) = 2\frac{\tilde{\rho}'\tilde{\nu}'' - \tilde{\rho}''\tilde{\nu}'}{(\tilde{\rho}'^2 + \tilde{\nu}'^2)^{\frac{3}{2}}}$$

où ' et " représentent les dérivées premières et secondes par rapport à lambda. Un "bon" paramètre de pondération lambda se situe près du coin du critère, là où la courbure k est au maximum. Dès lors on cherche :

$$\lambda^*_{LCurve} = \underset{\lambda \in [0,1[}{argmax}\, \kappa(\lambda)$$

Pour estimer la courbe L-Curve, nous devons calculer plusieurs couples de contraintes pour la caméra d'indice c et le capteur d'indice k, représentant les deux objectifs $(\varepsilon_c, \varepsilon_k)$ à minimiser pour différentes valeurs de lambda. Cela signifie que pour chaque valeur de lambda on optimise soit la dernière pose du dispositif [209] soit les N dernières poses avec une partie de la scène [314]. Ensuite on construit la courbe L-Curve avec les couples et on estime le meilleur lambda situé au maximum de courbure (max k).

# EP 2 572 319 B1

**Méthode de sélection par apprentissage**

**Validation croisée.**

La méthode de validation croisée est un outil très populaire basée sur des considérations statistiques :

un modèle adéquat (ici le facteur de pondération lambda) doit pouvoir prédire correctement des données manquantes. Plus précisément, si on enlève quelques mesures du jeu de données, alors la solution estimée (phase d'apprentissage : module [209 ou 314]) doit pouvoir prédire ces observations (lors de la phase de test).

Il existe plusieurs variantes de la validation croisée, qui se différencient principalement par leur gestion des ensembles de test et d'apprentissage. Dans le cas présent, le nombre limité d'observations de la caméra incite à utiliser la méthode recyclant les observations plus connue sous l'expression anglo-saxonne du 'leave-one-out' (en) mais l'on peut tout aussi bien utiliser une autre variante.

Le score de validation croisée Cvloo(l) reflète la qualité de la prédiction pour un certain paramètre de pondération lambda. Il représente la différence moyenne entre l'observation réelle yj d'un point 3D j et la prédiction $H_t^c([\mathbf{p}_t^{[j]}\mathbf{s}_t^j])$, où la pose $\mathbf{p}_t^{[j]}$ est optimisée sans le point j.

$$CV_{loo}(\lambda) = \frac{1}{n}\sum_{j=1}^{n} H_t^c([\mathbf{p}_t^{[j]}\mathbf{s}_t^j]) - \mathbf{y}_t^j$$

avec $\mathbf{p}_t^{[j]}$, la solution du module [209 ou 314] sans le point j.

L'objectif de la validation croisée est alors de maximiser la qualité de la prédiction que réalise le module [209 ou 314] pour un lambda, et ainsi minimiser les erreurs de prédiction.

$$\lambda_{CV}^* = \underset{\lambda}{argmin}\, CV_{loo}(\lambda)$$

**[211,311] Bases de données des contraintes pondérées**

Chaque contrainte pondérée est associée à une pose $p_t^c$ du dispositif pour chaque image si l'étape de sélection des images clés n'est pas mise en oeuvre ou pour chaque image clé et est ensuite stockée dans une base de données 211, 311. Cette contrainte (avec la pondération) sera réutilisée à chaque fois que la pose du dispositif associée sera raffinée dans le module d'ajustement [214,314]. Dans la base de données 211, 311, on stocke les éléments de la contrainte : la pondération $\lambda_k$, et la prédiction $\hat{p}_t^k$ de la pose du dispositif et non la contrainte entière, par exemple,

$\lambda_k\left\|\hat{T}_t^k - T_t\right\|$, T étant une partie de p comme il est précisé dans la notation.

**[214,314] Ajustement de faisceaux contraint (Extended Bundle adjustement)**

L'ajustement de faisceaux consiste en l'optimisation simultanée d'un certain nombre de poses du dispositif (toute ou partie, récupérée depuis la base de données [212,312]) ainsi qu'un certain nombre de primitives 3D de scène (stockés dans la base [213,313]), par exemple l'ensemble des primitives vues par les poses que l'on optimise.

La fonction de coût globale à minimiser est formée d'une part, avec la vision : distance entre les reprojections des éléments de la scène dans les images et leurs vraies mesures effectuées dans les images, et d'autre part, de toutes les contraintes pondérées associées aux différentes poses clés du système (base de données [211,311]).

Pour résoudre ce problème d'optimisation, on fait appel à un algorithme d'optimisation nommé Levenberg-Marquardt. On peut aussi utiliser d'autres algorithmes (Descente de gradient avec ou sans préconditionnement, Gauss-Newton etc.) connus de l'Homme du métier.

Typiquement, le procédé optimise seulement les 3 dernières caméras clés ou les 3 dernières poses de la

13

caméra, mais ce nombre peut varier.

**Ajustement de faisceaux local (LBA)**

Périodiquement, un raffinement est opéré sur la scène et la localisation du système afin de réduire les erreurs cumulées du SLAM incrémental. De bons résultats sont obtenus avec une optimisation locale (c'est-à-dire en ne raffinant que les dernières poses).

Il est ainsi possible d'optimiser, par exemple, au moins les poses des 2 dernières poses (éventuellement les poses clés). Une manière simple de faire est d'injecter les contraintes précédentes dans la fonction de coût LBA. On définit $X_t$ = $[p_{t\text{-M}}......p_t s']$, un vecteur comprenant des poses fixées ($p_{t\text{-M}},....p_{t\text{-N}}$), et des poses de la caméra que l'on souhaite raffiner ($p_{t-(N-1)},p_{t-(N-2)},p_t$) et l'estimation courante d'une partie s' de la scène s, par exemple l'ensemble des points 3D vus dans les N dernières poses.

On pose, par exemple, N =3, M= 9

L'idée est d'optimiser les poses, c'est-à-dire d'optimiser la position et l'orientation d'une caméra et d'un dispositif

La fonction de coût d'ajustement des faisceaux avec les contraintes devient alors:

$$E_{BA}\left(X_t,Z_t\right) = \sum_{t'=t-M}^{t-N} \varepsilon_c^2\left(\left[p_{t'}s\right],z_{t'}^c\right) + \sum_{t'=t-(N-1)}^{t} E_p\left(\left[p_{t'}s\right],Z_t\right)$$

Le premier membre de l'équation correspond à la somme des reprojections de la caméra dont les poses sont fixes

La première partie de l'équation correspond aux erreurs de reprojection de la caméra dont les poses ne sont pas raffinées (donc fixes).

Il n'est pas nécessaire de contraindre toutes les poses dans ce cas, seules les erreurs de reprojection originale sont prises en compte.

La seconde partie de l'équation est composée des erreurs de reprojections et des contraintes sur les N poses les plus récentes de la caméra.

Le procédé optimise ensuite la localisation du système (les N dernières caméra) et une partie de la scène en utilisant l'algorithme de Levenberg-Marquardt, pour résoudre

$$\left[p_{t-2}p_{t-1}p_t s'\right]^* = \arg\min_{\left[p_{t-2}p_{t-1}p_t s'\right]} E_{BA}\left(X_t,X_z\right)$$

Le procédé et le système selon l'invention permettent donc de réaliser une fusion efficace, automatique et temps réel entre les données.

Une telle fusion, qui tire ses performances de l'intégration de la fusion directement dans l'ajustement des faisceaux n'était pas possible par les méthodes de l'art antérieur qui ne permettent pas l'estimation optimisée d'un terme de pondération en temps réel. Elle offre une fusion précise et rapide par intégration directe des données au sein d'un processus d'ajustements de faisceau, et de fait offre une précision plus grande que les méthodes utilisant le filtre de Kalman Etendu.

Il n'est pas nécessaire par cette technique d'estimer les covariances initiales des mesures, ni de propager les covariances sur l'état du système, car le procédé selon l'invention s'adapte automatiquement: estimation en temps réel du paramètre de pondération lambda.

L'estimation du facteur de pondération est dynamique et temps-réel. Il est calculé pour chaque nouvelle optimisation, ce qui offre une méthode d'optimisation plus complète avec un historique des états précédents, c'est-à-dire que l'on raffine les N dernières poses du dispositif contrairement aux méthodes par filtre de Kalman selon l'art antérieur.

**Revendications**

1. Procédé pour localiser un dispositif comprenant une étape de fusion des données issues d'un premier capteur images et d'un module de mesure de mouvement et/ou de position, ledit premier capteur et ledit module de mesure de mouvement et/ou de position étant solidaire et formant un dispositif, **caractérisé en ce qu'**il comporte au moins les étapes suivantes :

   • Une première étape consistant à acquérir plusieurs points sur les images pour définir une pose courante $\boldsymbol{p}_t^c$ du dispositif caméra image et module de mesure mouvement et/ou position pour un instant donné t,

• Une étape de prédiction de la pose prédite $\hat{p}_t^k$ du dispositif caméra et capteur mouvement/position pour un même instant donné t et en utilisant les mesures du module de mesure de mouvement et/ou de position,

• Une étape où l'on détermine une contrainte $\varepsilon_k$ associée pour le capteur k du dispositif caméra c et capteur k,

• Une étape où l'on détermine automatiquement un coefficient de pondération $\lambda_t$ de ladite contrainte,

• Une étape d'estimation de la pose courante $\mathbf{p}_t$ dudit dispositif,

• Une étape d'optimisation simultanée des poses $\mathbf{p}_{t'}$ du dispositif caméra + capteur par la technique d'ajustement des faisceaux en utilisant la fonction de coût suivante :

$$E_{BA}\left(X_t, Z_t\right) = \sum_{t'=t-M}^{t-N} \varepsilon_c^2\left(\left[p_{t'}s\right], z_{t'}^c\right) + \sum_{t'=t-(N-1)}^{t} E_p\left(\left[p_{t'}s\right], Z_t\right)$$

où
$(p_{t-M},....p_{t-N})$ correspond à des poses fixées et $(p_{t-(N-1)}, p_{t-(N-2)}, p_t)$ des poses de la caméra à raffiner
avec

$$E_p\left(\boldsymbol{x}_t, \boldsymbol{Z}_t\right) = \varepsilon_c^2\left(\boldsymbol{x}_t, z_t^c\right) + \lambda_t^2 \varepsilon_k^2\left(\boldsymbol{x}_t, \boldsymbol{z}_t^k\right)$$

2

∘ $\varepsilon_c^2$ : erreurs de reprojection de la scène dans les images

∘ $\boldsymbol{x}_t$ : = [**ps**] la pose du dispositif et la scène

∘ $\boldsymbol{z}_t^c$ : = les observations de la scène détectées dans l'image de la caméra c à l'instant t

∘ $Z_t = \left[z_t^c \, z_t^k\right]$ ensemble de toutes les mesures pour tous les capteurs caméra c et des capteurs k ou module de mouvement et/ou de position à un instant t.

2. Procédé selon la revendication 1 **caractérisé en ce qu'**il comporte une étape d'initialisation des bases de données de poses clés et des éléments de scène (3D) en reconstruisant l'environnement du capteur images en utilisant un nombre donné de premières poses et en exécutant une triangulation des primitives 3D à partir des éléments d'intérêts les constituant pour les poses choisies.

3. Procédé selon la revendication 1 **caractérisé en ce que** l'étape de sélection automatique du coefficient de pondération utilise le résultat d'une étape de raffinement de la pose du dispositif en partant d'une première estimée de pose du dispositif délivrée par le module d'estimation de la pose par vision [204,304] et en tenant compte des éléments de scène précédemment estimés et [209], en ajoutant au terme de coût, l'erreur de la prédiction (contrainte) délivrée par le module de sélection automatique de la pondération [208] et pondérée par un facteur lambda $\lambda$ ou $\lambda_t$, appris dans le module de sélection automatique de pondération [208,308], à la fin de l'étape de raffinement, la pose courante du système est ajoutée à la base de données des poses [212].

4. Procédé selon la revendication 1 **caractérisé en ce que** l'étape de sélection automatique de la pondération comporte une étape (309) de raffinement de la pose du dispositif, dans le module [309], la fonction de coût est uniquement composée des erreurs de reprojections des primitives 3D de la scène sur la caméra dont la pose est actuellement raffinée suivie d'une étape de construction de la contrainte, puis de l'étape de sélection automatique de la pondération, à la fin de l'étape de raffinement, la pose courante du système est ajoutée à la base de données (historique) des poses [312].

5. Procédé selon la revendication 1 **caractérisé en ce qu'**il comporte une étape de sélection d'images clés comprenant les étapes suivantes :

sélectionner une première image I1 comme une image clé, puis une seconde image 12 choisie aussi éloignée que possible de I1 dans la vidéo et possédant au moins M points de correspondance d'intérêt avec 11, puis choisir une troisième image 13, la plus éloignée de 12 de façon telle que il y a au moins M points d'intérêts correspondant entre 13 et 12 et au moins M' points d'intérêts correspondant entre 13 et 11, et ainsi de suite pour les images In suivantes, procéder de même en vérifiant que les images In-2, In-1 et In possèdent au moins M points d'intérêts correspondant à la même primitive 3D.

6. Procédé selon la revendication 1 **caractérisé en ce que** la contrainte est choisie parmi la liste des contraintes suivante :

Contrainte de position $\varepsilon_k^t\left(x_t, z_t^k\right) = \dfrac{1}{\sqrt{3}}\left\|\hat{T}_t^k - T_t\right\|$

Contrainte d'orientation : $\varepsilon_k^R\left(x_t, z_t^k\right) = \dfrac{1}{\sqrt{9}}\left\|\hat{R}_t^k R_t^T - I_3\right\|$ avec R la matrice de rotation paramétrisant l'orientation, $I$ la matrice Identité, .....

Contrainte de facteur d'échelle (ou de la norme de la translation)

$$\varepsilon_k^t\left(x_t, z_t^k\right) = \left\|\left\|\hat{T}_t^k - T_{t-1}\right\| - \left\|T_t - T_{t-1}\right\|\right\|$$

7. Procédé selon la revendication 1 **caractérisé en ce qu'**il utilise pour prédire la pose $\hat{p}_t^k$ du dispositif le modèle d'observation inverse $H_t^{-1}$ qui offre une estimation de l'état du dispositif $x_{t'}^k$ à un instant t'≤ t, correspondant à la dernière mesure $z_{t'}^k$ du capteur k:

$$\hat{p}_t^k = F_t\left(H_{t'}^{-1}\left(z_{t'}^k - n_{t'}^k\right)\right) + w_t$$

ce modèle estime une pose $\hat{p}_t^k$ du dispositif à l'instant t correspondant au temps de l'image $I_t$, à partir de la mesure $z_t^k$ obtenue par le capteur de mouvement/position et de l'état précédent $x_{t-1}$.

8. Système pour fusionner des données issues d'un premier capteur images (101) et d'un module de mesure de mouvement et/ou de position, ledit premier capteur et ledit module de mesure de mouvement et/ou de position (102) étant solidaire et formant un dispositif, ledit système comportant : une unité de traitement (103) adaptée à exécuter les étapes du procédé selon l'une des revendications 1 à 7.

**Patentansprüche**

1. Verfahren zum Lokalisieren einer Vorrichtung, umfassend einen Schritt der Zusammenführung von Daten, die einem ersten Bildsensor und einem Messmodul für Bewegung und/oder Stellung entstammen, wobei der ersten Sensor und der Messmodul für Bewegung und/oder Stellung fest verbunden werden und eine Vorrichtung bilden, **dadurch gekennzeichnet, dass** es mindestens die folgenden Schritte umfasst:

• einen ersten Schritt, der darin besteht, mehrere Punkte auf den Bildern zu erfassen, um eine übliche Stellung $p_t^c$ der Kamerabildvorrichtung und des Messmoduls für Bewegung und/oder Stellung für einen bestimmten Zeitpunkt t zu definieren,

• einen Vorhersageschritt der vorhergesagten Stellung $\hat{p}_t^k$ der Kameravorrichtung und des Sensors für Bewegung/Stellung für einen selben bestimmten Zeitpunkt t und durch Verwenden der Messungen des Messmoduls für Bewegung und/oder Stellung,

• einen Schritt, in dem eine dem Sensor k der Kameravorrichtung c und dem Sensor k zugehörige Einschränkung $\varepsilon_k$ ermittelt wird,

• einen Schritt, in dem ein Gewichtungsbeiwert $\lambda_t$ der Einschränkung automatisch ermittelt wird,

• einen Abschätzungsschritt der üblichen Stellung $p_t$ der Vorrichtung,

• einen Schritt der gleichzeitigen Optimierung der Stellungen $p_{t'}$ der Kameravorrichtung + Sensor durch die Technik der Anpassung der Strahlen durch Verwenden der folgenden Kostenfunktion:

$$E_{BA}\left(X_t, Z_t\right) = \sum_{t'=t-M}^{t-N} \varepsilon_c^2\left(\left[p_{t'}s\right], z_{t'}^c\right) + \sum_{t'=t-(N-1)}^{t} E_p\left(\left[p_{t'}s\right], Z_t\right)$$

in der

$(p_{t-M},....p_{t-N})$ den festgelegten Stellungen und $(p_{t-(N-1)}),p_{t-(N-2)},p_t)$ den zu verfeinernden Stellungen der Kamera entsprechen,

mit

$$E_p\left(\boldsymbol{x}_t, \boldsymbol{Z}_t\right) = \varepsilon_c^2\left(\boldsymbol{x}_t, z_t^c\right) + \lambda_t^2 \varepsilon_k^2\left(\boldsymbol{x}_t, z_t^k\right)$$

∘ $\varepsilon_c^2$:

Fehler der Reprojektion der Szene in den Bildern

∘ $Xt$:= [**ps**] die Stellung der Vorrichtung und die Szene

∘ $\mathbf{z}_t^c$: = die erkannten Beobachtungen der Szene im Bild der Kamera c zum Zeitpunkt t

∘ $z_t = \left[z_t^c z_t^k\right]$ Gesamtheit aller Messungen für alle Kamerasensoren c und der Sensoren k oder Modul für Bewegung und/oder Stellung zu einem Zeitpunkt t.

2.   Verfahren nach Anspruch 1, **dadurch gekennzeichnet, dass** es einen Schritt der Initialisierung der Datenbanken von Schlüsselstellungen und der Szeneelemente (3D) durch Rekonstruieren des Umfelds des Bildsensors durch Verwenden einer gegebenen Anzahl von ersten Stellungen und durch Ausführen einer Triangulation der 3D-Stammfunktionen anhand der Interessenelemente umfasst, die sie für die gewählten Stellungen darstellen.

3.   Verfahren nach Anspruch 1, **dadurch gekennzeichnet, dass** der Schritt der automatischen Auswahl des Gewichtungsbeiwerts das Ergebnis eines Verfeinerungsschritts der Vorrichtungsstellung nutzt, ausgehend von einer ersten, durch den Abschätzungsmodul der Stellung nach Sicht [204, 304] gelieferten Schätzung der Vorrichtungsstellung und unter Berücksichtigung der zuvor geschätzten Szeneelemente und [209] durch Hinzufügen, in Bezug auf die Kosten, des durch den Modul zur automatischen Gewichtungsauswahl [208] gelieferten und durch einen Faktor lambda $\lambda$ oder $\lambda_t$ gewichteten, in dem Modul zur automatischen Auswahl der Gewichtung [208, 308] gelernten Vorhersagefehler (Einschränkung), am Ende des Verfeinerungsschritts, wobei die übliche Stellung des Systems der Datenbank der Stellungen [212] hinzugefügt wird.

4.   Verfahren nach Anspruch 1, **dadurch gekennzeichnet, dass** der Schritt der automatischen Gewichtungsauswahl einen Schritt (309) der Verfeinerung der Vorrichtungsstellung in dem Modul [309] umfasst, wobei die Kostenfunktion ausschließlich aus Reprojektionsfehlern von 3D-Stammfunktionen der Szene auf der Kamera gebildet wird, deren Stellung am Ende des Verfeinerungsschritts augenblicklich verfeinert wird, gefolgt von einem Einschränkungskonstruktionsschritt, danach des automatischen Auswahlschritts der Gewichtung, wobei die übliche Stellung des Systems der Datenbank (Verlauf) der Stellungen [312] hinzugefügt wird.

5.   Verfahren nach Anspruch 1, **dadurch gekennzeichnet, dass** es einen Schritt der Auswahl von Schlüsselbildern aufweist, umfassend die folgenden Schritte: Auswählen eines ersten Bildes I1 als ein Schlüsselbild, dann eines zweiten Bildes I2, das soweit wie möglich von I1 entfernt im Video ausgewählt ist und das mindestens M Übereinstimmungspunkte von Interesse besitzt, dann Wählen eines dritten Bildes I3, das am weitesten von I2 entfernt ist, derart, dass es mindestens M Interessenpunkte, die zwischen I3 und I2 übereinstimmen und mindestens M' Interessenpunkte gibt, die zwischen I3 und I1 übereinstimmen, und so weiter für die folgenden Bilder In, gleichermaßen Vorgehen durch Überprüfen, dass die Bilder In-2, In-1 und In mindestens M Interessenpunkte besitzen, die mit der gleichen 3D-Stammfunktion übereinstimmen.

6.   Verfahren nach Anspruch 1, **dadurch gekennzeichnet, dass** die Einschränkung aus der Liste der folgenden Einschränkungen ausgewählt wird:

Einschränkung der Stellung $\varepsilon_k^t\left(x_t, z_t^k\right) = \frac{1}{\sqrt{3}}\left\|\hat{T}_t^k - T_t\right\|$

Einschränkung der Ausrichtung: $\varepsilon_k^R\left(x_t, z_t^k\right) = \frac{1}{\sqrt{9}}\left\|\hat{R}_t^k R_t^T - I_3\right\|$ mit R als Rotationsmatrix, die die Orientierung einstellt, / die Identitätsmatrix, .....

Einschränkung des Skalierungsfaktors (oder der Verschiebungsnorm)

$$\varepsilon_k^t\left(x_t, z_t^k\right) = \left\|\left\|\hat{T}_t^k - T_{t-1}\right\| - \left\|T_t - T_{t-1}\right\|\right\|$$

**7.** Verfahren nach Anspruch 1, **dadurch gekennzeichnet, dass** es für die Vorhersage der Vorrichtungsstellung $p_t^k$ das umgekehrte Beobachtungsmodell $H_t^{-1}$ nutzt, das eine Abschätzung des Zustands der Vorrichtung $x_{t\prime}^k$ zu einem Zeitpunkt t'≤t bietet, der der letzten Messung $z_{t\prime}^k$ des Sensors k entspricht:

$$\hat{p}_t^k = F_t\left(H_{t\prime}^{-1}\left(z_{t\prime}^k - n_{t\prime}^k\right)\right) + w_t$$

wobei dieses Modell eine Stellung $\hat{p}_t^k$ der Vorrichtung zum Zeitpunkt t, der der Zeit des Bilds $I_t$ entspricht, anhand der Messung $z_t^k$ schätzt, die durch den Sensor für Bewegung/Stellung und des vorhergehenden Zustands $x_{t-1}$ erhalten wird.

**8.** System zum Zusammenführen von Daten, die einem ersten Bildsensor (101) und einem Modul zur Messung von Bewegung und/oder Stellung entstammen, wobei der erste Sensor und der Messmodul für Bewegung und/oder Stellung (102) fest verbunden werden und eine Vorrichtung bilden, wobei das System aufweist: eine Verarbeitungseinheit (103), die angepasst wird, um die Schritte des Verfahrens nach einem der Ansprüche 1 bis 7 auszuführen.

**Claims**

**1.** A method for locating a device comprising a fusion step of data arising from a first image sensor and from a motion and/or position measuring module, the said first sensor and the said motion and/or position measuring module being integral and forming a device, **characterized in that** it comprises at least the following steps:

• A first step consisting of acquiring several points on the images in order to define a current pose $p_t^c$ of the device image camera and motion and/or position measuring module for a given instant t,

• A prediction step of the predicted pose $\hat{p}_t^k$ of the device camera and motion/position sensor for the same given instant t and using the measurements from the motion and/or position measuring module,

• A step where we determine an associated constraint $\varepsilon_k$ for the sensor k of the device camera c and sensor k,

• A step where we automatically determine a weighting coefficient $\lambda_t$ of the said constraint,

• An estimation step of the current pose $\mathbf{p}_t$ of the said device,

• A step of simultaneous optimization of the poses $\mathbf{p}_{t\prime}$ of the device camera + sensor by the bundle adjustment technique using the following cost function:

$$E_{BA}\left(X_t, Z_t\right) = \sum_{t\prime=t-M}^{t-N} \varepsilon_c^2\left(\left[p_{t\prime}s\right], z_{t\prime}^c\right) + \sum_{t\prime=t-(N-1)}^{t} E_p\left(\left[p_{t\prime}s\right], Z_t\right)$$

where

$(p_{t-M},....p_{t-N})$ corresponds to fixed poses and $(p_{t-(N-1)}, p_{t-(N-2)}, p_t)$ poses of the camera to refine with

$$E_p\big(\boldsymbol{x}_t,\boldsymbol{Z}_t\big)=\varepsilon_c^2\big(\boldsymbol{x}_t,z_t^c\big)+\lambda_t^2\varepsilon_k^2\big(\boldsymbol{x}_t,z_t^k\big)$$

- $\varepsilon_c^2$ : reprojection errors of the scene in the images

- $\boldsymbol{x}_t = [\textbf{ps}]$ the pose of the device and the scene

- $z_t^c$ : = the observations of the scene detected in the image of the camera c at the instant t

- $Z_t = \big[z_t^c\, z_t^k\big]$ set of all the measurements for all the camera c sensors and of the sensors k of motion and/or position module at an instant t.

2. The method as claimed in claim 1, **characterized in that** it comprises a step for initializing the databases of the key poses and of the scene elements (3D) by reconstructing the environment of the image sensor using a given number of first poses and executing a triangulation of the 3D primitives from the elements of interest that constitute them for the chosen poses.

3. The method as claimed in claim 1, **characterized in that** the step of automatic selection of the weighting coefficient uses the result of a refinement step of the pose of the device, starting from a first estimation of the pose of the device delivered by the module for estimating the pose by vision [204,304] and taking account of the previously estimated scene elements and [209], by adding to the cost term the prediction error (constraint) delivered by the automatic selection module of the weighting [208] and weighted by a factor lambda $\lambda$ or $\lambda_t$ learned in the automatic selection module of weighting [208,308], at the end of the refinement step, the current pose of the system is added to the database of the poses [212].

4. The method as claimed in claim 1, **characterized in that** the step of automatic selection of weighting comprises a refinement step [309] of the pose of the device, in the module [309], the cost function is composed only of the reprojection errors of the 3D primitives of the scene on the camera whose pose is currently refined followed by a construction step of the constraint, then by the step of automatic selection of weighting, at the end of the refinement step, the current pose of the system is added to the database (historical) of the poses [312].

5. The method as claimed in claim 1, **characterized in that** it comprises a step of selection of the key images including the following steps: select a first image 11 as a key image, then a second image 12 chosen as distant as possible from 11 in the video and possessing at least M points of correspondence of interest with 11, then select a third image 13, the most distant from 12 such that there are at least M points of interest correspondent between 13 and 12 and at least M' points of interest correspondent between 13 and 11, and so on for the following images In; proceed in the same way, verifying that the images In-2, In-1 and In possess at least M points of interest corresponding to the same 3D primitive.

6. The method as claimed in claim 1, **characterized in that** the constraint is chosen from the following list of constraints:

Position constraint $\varepsilon_k^t\big(\boldsymbol{x}_t,z_t^k\big)=\dfrac{1}{\sqrt{3}}\big\|\hat{T}_t^k - T_t\big\|$

Orientation constraint: $\varepsilon_k^R\big(\boldsymbol{x}_t,z_t^k\big)=\dfrac{1}{\sqrt{9}}\big\|\hat{R}_t^k R_t^T - I_3\big\|$ with R as the rotation matrix parametrizing the orientation, $I$ the Identity matrix, ...

Scale factor constraint (or that of the translational standard)

$$\varepsilon_k^t\big(\boldsymbol{x}_t,z_t^k\big)=\Big\|\big\|\hat{T}_t^k - T_{t-1}\big\| - \big\|T_t - T_{t-1}\big\|\Big\|.$$

7. The method as claimed in claim 1, **characterized in that** in order to predict the pose $p_t^k$ of the device it uses the inverse observation model $H_t^{-1}$, which provides an estimation of the state of the device $\boldsymbol{x}_{t'}^k$ at an instant t'≤t corresponding to the last measurement $z_{t'}^k$ of the sensor k:

$$\hat{p}_t^k = F_t\left(H_{t'}^{-1}\left(z_{t'}^k - n_{t'}^k\right)\right) + w_t$$

this model estimates a pose $\hat{p}_t^k$ of the device at the instant t corresponding to the image time $I_t$, from the measurement $z_t^k$ obtained by the motion/position sensor and from the preceding state $x_{t-1}$.

8. A system for fusing data arising from a first image sensor (101) and from a motion and/or position measuring module, the said first sensor and the said motion and/or position measuring module (102) being integral and forming a device, the said system including: a processing unit (103) suitable for executing the steps of the method as claimed in one of the claims 1 to 7.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Error propagations for local bundle adjustment. **EUDES A et al.** Computer Vision and Pattern Recognition, 2009.CVPR 2009. IEEE CONFERENCE ON. IEEE, 20 Juin 2009
- efficient Camera Smoothing in Sequential Structure-from-Motion Using Approximate Cross-Validation. **MICHELA FARENZA.** COMPUTER VISION A ECCV 2008. SPRINGER BERLIN HEIDELBERG, 12 Octobre 2008, 196-209

- Generic and real-time structure from motion using local bundle adjustment. **MOURAGNON et al.** IMAGE AND COMPUTING. ELSEVIER, 02 Juillet 2009, vol. 27, 1178-1193